# EUROPEAN PATENT APPLICATION

(11) **EP 1 868 102 A1**
(43) Date of publication of application: **19.12.2007**
(21) Application number: 05721001.5
(22) Date of filing: 17.03.2005
(51) Int. Cl.: G06F 13/00

(54) **COMMUNICATION INFORMATION MANAGEMENT METHOD, COMMUNICATION INFORMATION MANAGEMENT DEVICE, RADIO COMMUNICATION DEVICE, RELAY DEVICE, COMMUNICATION INFORMATION MANAGEMENT PROGRAM, RADIO COMMUNICATION PROGRAM, RELAY PROGRAM, AND COMMUNICATION INFORMATION MANAGEMENT SYSTEM**

(71) Applicant: Fujitsu Ltd., Kawasaki-shi, Kanagawa 211-8588 (JP)
(72) Inventor: OKADA, Yoshiyuki c/o FUJITSU LIMITED, 1-1,, Kanagaw a; 2118588 (JP)
(74) Representative: Cooper-Rolfe, Elizabeth Louise
(86) International application number: PCT/JP2005/004814
(87) International publication number: WO 2006/098037

(57) **Abstract**

Data communication is performed between one of cellular phones (50, 60) capable of performing peer-to-peer communication and an access-point device (40) that relays, when the cellular phone (50, 60) is authenticated, communication between the cellular phone (50, 60) and a contents-provider server (10) or one of company servers (20, 30) connected to the Internet by connecting the cellular phone (50, 60) to the Internet, or is performed, when it is determined that communication between the cellular phones (50, 60) is permissible, between the cellular phones (50, 60). When data communication is performed, the communication-information management apparatus (70) stores therein information related to the data communication and charges a value for the data communication performed by the cellular phone (50, 60) or the access-point device (40) based on stored information.

## Description

### TECHNICAL FIELD

The present invention relates to a communication-information management method, a communication-information management apparatus, a communication-information management program, a communication-information management system, a wireless-communication device, a wireless-communication program, a relay device, and a relay program for managing information related to peer-to-peer data communication between wireless-communication devices or information related to communication relayed by a relay device, the relay device connecting, when a wireless-communication device is authenticated, the wireless-communication device to a predetermined network to relay communication between the wireless-communication device and another device that is connected to the network. More particularly, the present invention relates to a communication-information management method, a communication-information management apparatus, a wireless-communication device, a relay device, a communication-information management program, a wireless-communication program, a relay program, and a communication-information management system that can realize a highly reliable service capable of distributing data only between specified devices while securing benefit of a provider that provides the service.

### BACKGROUND ART

Communication based on communication systems such as an infrared communication based on the IrDA standards, a wireless LAN communication based on the IEEE802.1X, and a Bluetooth communication can be realized between a plurality of information terminals such as cellular phones or personal computers.

In a field of cellular phones that have won popularity, because normal public lines have a low communication speed, peer-to-peer communication between cellular phones by using the above communication systems has attracted attention, but is in little growth due to competition between carriers that provide cellular-phone services.

To change the situation, several technologies for distributing contents via the peer-to-peer communication have disclosed. In such a peer-to-peer communication system, for example, when a wireless terminal that has received contents from a contents-distribution server transfers the contents to a wireless terminal, a coupon or a point for deducting a part from a value for the contents is issued to the wireless terminal (see Patent Document 1, for example).

There is disclosed a charging method for charging a proper value for data relay performed by a relay terminal in a case that data is transmitted via the relay terminal from a source terminal to a destination terminal both made up of an ad-hoc network (see Patent Document 2, for example).

Patent Document 1: Japanese Patent Application Laid-open No. 2003-333079
Patent Document 2: Japanese Patent Application Laid-open No. 20C2-209028

### DISCLOSURE OF INVENTION

### PROBLEM TO BE SOLVED BY THE INVENTION

However, in the above-described conventional technologies, there is a problem that it is difficult for a provider to provide a service of distributing company data only between specified terminals.

It means that, if contents is transmitted via a plurality of terminals, it is impossible to follow routes along which the contents is transmitted, so that a range where the contents is distributed cannot be restricted according to the above methods.

Specifically, in the above peer-to-peer communication system, if a terminal that is out of a communication coverage by the contents-distribution server receives the contents as a result of transmission of the contents by a plurality of terminals, it is impossible to check which terminal receives the contents, that is, it is impossible to distribute the contents only between predetermined terminals.

In the above charging method, a charging terminal only charges a value to the relay terminal that relays data. That is, the charging terminal does not control distribution of the contents.

Therefore, it has been an important issue to develop a technology of realizing a highly reliable service capable of distributing data of a company only between specified devices while securing benefit of a service provider that provides the service.

The present invention has been achieved to solve the above problems in the conventional technology, and it is an object of the present invention to provide a communication-information management method, a communication-information management apparatus, a wireless-communication device, a relay device, a communication-information management program, a wireless-communication program, a relay program, and a communication-information management system that can realize a highly reliable service capable of distributing data only between specified devices while securing benefit of a provider that provides the service.

### MEANS FOR SOLVING PROBLEM

To solve the problems and achieve the object mentioned above, according to an aspect of the present invention, a communication-information management method of managing information related to peer-to-peer data communication between wireless-communication devices or information related to data communication relayed by a relay device that relays, when a wireless-communication device is authenticated and connected to a predetermined network, data communication between the wireless-communication device and a different device that is connected to the network, includes: a communication step of determining whether it is permitted to perform data communication between the wireless-communication device and the relay device or data communication between the wireless-communication devices, and performing, when it is determined that the data communication is permissible, the data communication between the wireless-communication devices; ah information storing step of storing information related to the data communication when the data communication is performed at the communication step; and a charging step of charging a value for the data communication performed by the wireless-communication device or the relay device based on the information stored at the information storing step.

According to another aspect of the present invention, in the above aspect, the communication step includes performing data communication for uploading data from the wireless-communication device to the different device that is connected to the network.

According to still another aspect of the present invention, in the above aspect, the communication step includes uploading only an updated part of data that has been downloaded from the different device that is connected to the network to the wireless-communication device.

According to still another aspect of the present invention, in the above aspect, the data communication between the wireless-communication device and the relay device is performed based on a data communication system selected from a group consisting of wireless LAN, UWB, IrDA, and Bluetooth.

According to another aspect of the present invention, a communication-information management apparatus that manages information related to peer-to-peer data communication between wireless-communication devices or information related to data communication relayed by a relay device that relays, when a wireless-communication device is authenticated and connected to a predetermined network, communication between the wireless-communication device and a different device that is connected to the network, includes: an information storage unit that stores therein, when data communication is performed between the wireless-communication device and the relay device or when, as a result of determination that data communication between the wireless-communication devices is permissible, data communication is performed between the wireless-communication devices, information related to the data communication; and a charging unit that charges a value for the data communication performed by the wireless-communication device or the relay device based on the information stored in the information storage unit.

According to another aspect of the present invention, a wireless-communication device that performs wireless communication with other devices, includes: a storage unit that stores therein data received from a relay device or data received from a different wireless-communication device via peer-to-peer communication, the relay device relaying, when the wireless-communication device is authenticated and connected to a predetermined network, data communication between the wireless-communication device and a different device that is connected to the network; a data transmitting unit that transmits the data stored in the storage unit to the relay device, or that inquires of a communication-information management apparatus, which determines whether it is permitted to perform communication between wireless terminal devices and charges a value for data transmission, whether it is permitted to perform data communication and then transmits the data stored in the storage unit to a wireless-communication device that is determined to be permissible for data communication as a result of inquiry; and a data transmission-information transmitting unit that transmits to the communication-information management apparatus information related to data transmission performed by the data transmitting unit.

According to another aspect of the present invention, a relay device that connects, under conditions that a communication-information management apparatus, which determines whether it is permitted to perform communication between wireless terminal devices capable of peer-to-peer communication and charges a value for data transmission, permits to perform data communication, and that a wireless-communication device capable of peer-to-peer communication is authenticated, the wireless-communication device to a predetermined network and relays data communication between the wireless-communication device and a different device that is connected to the network, includes: a storage unit that stores therein data received from the different device that is connected to the network or data received from the wireless-communication device; a data transmitting unit that transmits, when the data received from the different device that is connected to the network is stored in the storage unit, the data to the wireless-communication device, and that transmits, when the data received from the wireless-communication device is stored in the storage unit, the data to the different device that is connected to the network; and a data transmission-information transmitting unit that transmits to the communication-information management apparatus information related to data transmission performed by the data transmitting unit.

According to another aspect of the present invention, a communication-information management program for managing information related to peer-to-peer data communication between wireless-communication devices or information related to data communication relayed by a relay device, the relay device relaying, when a wireless-communication device is authenticated and connected to a predetermined network, data communication between the wireless-communication device and a different device that is connected to the network, causes a computer to execute: an information storing step of storing, when data communication is performed between the wireless-communication device and the relay device or when, as a result of determination that data communication between the wireless-communication devices is permissible, data communication is performed between the wireless-communication devices, information related to the data communication; and a charging step of charging a value for the data communication performed by the wireless-communication device or the relay device based on the information stored at the information storing step.

According to another aspect of the present invention, a wireless-communication program for performing wireless communication with a different device, causes a computer to execute: a storing step of storing data received from a relay device or data received from a different wireless-communication device via peer-to-peer communication, the relay device relaying, when the wireless-communication device is authenticated and connected to a predetermined network, data communication between the wireless-communication device and a different device that is connected to the network; a data transmitting step of transmitting data stored at the storing step to the relay device, or inquiring of a communication-information management apparatus, which determines whether it is permitted to perform communication between wireless terminal devices and charges a value for data transmission, whether it is permitted to perform data communication and then transmits the data stored at the storing step to a wireless-communication device that is determined to be permissible for data communication as a result of inquiry; and a data transmission-information transmitting step of transmitting to the communication-information management apparatus information related to data transmission performed at the data transmitting step.

According to another aspect of the present invention, a relay program for connecting, under conditions that a communication-information management apparatus, which determines whether it is permitted to perform communication between wireless terminal devices capable of peer-to-peer communication and charges a value for data transmission, permits to perform data communication, and that a wireless-communication device capable of peer-to-peer communication is authenticated, the wireless-communication device to a predetermined network and relaying data communication between the wireless-communication device and a different device that is connected to the network, causes a computer to execute: a storing step of storing data received from the different device that is connected to the network or data received from the wireless-communication device; a data transmitting step of transmitting, when the data received from the different device that is connected to the network is stored at the storing step, the data to the wireless-communication device, and that transmits, when the data received from the wireless-communication device is stored in a storage unit, the data to the different device that is connected to the network; and a data transmission-information transmitting step of transmitting to the communication-information management apparatus information related to data transmission performed at the data transmitting step.

According to another aspect of the present invention, a communication-information management system that manages information related to peer-to-peer data communication between wireless-communication devices or information related to data communication relayed by a relay device that relays, when a wireless-communication device is authenticated and connected to a predetermined network, data communication between the wireless-communication device and a different device that is connected to the network, includes: a communication unit that determines whether it is permitted to perform data communication between the wireless-communication device and the relay device or data communication between the wireless-communication devices, and performs, when it is determined that the data communication is permissible, the data communication between the wireless-communication devices; an information storage unit that stores therein information related to the data communication when the data communication is performed by the communication unit; and a charging unit that charges a value for the data communication performed by the wireless-communication device or the relay device based on the information stored in the information storage unit.

### EFFECT OF THE INVENTION

According to an aspect of the present invention, it is performed data communication between a wireless-communication device capable of performing peer-to-peer communication and a relay device that connects, when the wireless-communication device is authenticated, the wireless-communication device to a predetermined network to relay data communication between the wireless-communication device and another device that is connected to the network, or data communication between wireless-communication devices under conditions that it is determined that communication between the wireless-communication devices is permissible. When the data communication is performed, information related to the data communication is stored and a value for the data communication performed by the wireless-communication device or the relay device is charged based on stored information. As a result, it is possible to realize a highly reliable service capable of distributing data only between specified devices while securing benefit of a provider that provides the service.

According to another aspect of the present invention, it is also performed data communication for uploading data from the wireless-communication device to a device connected to the predetermined network. It is possible to obtain an effect of easily conducting a questionnaire survey in such a way that a questionnaire is downloaded and then answers to the questionnaire are uploaded.

According to still another aspect of the present invention, only an updated part is uploaded from among data that has been downloaded from the device that is connected to the predetermined network to the wireless-communication device, so that it is possible to obtain an effect of uploading data in a shorter period.

According to still another aspect of the present invention, data communication between the wireless-communication device and the relay device is performed based on a data communication system such as wireless LAN, UWB, IrDA, or Bluetooth, so that it is possible to obtain an effect of transmitting/receiving a large amount of data by using a high speed data communication between the wireless-communication device and the relay device.

According to still another aspect of the present invention, when data communication is performed between the wireless-communication device capable of performing peer-to-peer communication and the relay device that connects, when the wireless-communication device is authenticated, the wireless-communication device to the predetermined network to relay data communication between the wireless-communication device and another device that is connected to the network, or when data communication is performed between the wireless-communication devices as result that it is determined that communication between the wireless-communication devices is permissible, information related to the data communication is stored and a value for the data communication performed by the wireless-communication device or the relay device is charged based on stored information. As a result, it is possible to realize a highly reliable service capable of distributing data only between specified devices while securing benefit of a provider that provides the service.

According to still another aspect of the present invention, there is stored data received from the relay device that connects, when the wireless-communication device capable of performing peer-to-peer communication is authenticated, the wireless-communication device to the other device that is connected to the predetermined network to relay data communication between the wireless-communication device and the other device, or data received from another wireless-communication device that performs peer-to-peer communication. Stored data is transmitted to the relay device or a wireless-communication device that is determined to be permissible in data communication as a result of determination in response to an inquiry about data-communication permission performed by a communication-information management apparatus that determines whether it is permitted to communicate with a wireless terminal device and that charges a value for data transmission. Thereafter, information on transmitted data is transmitted to the communication-information management apparatus. As a result, it is possible to obtain an effect of realizing a highly reliable service capable of distributing data only between specified devices while securing benefit of a provider that provides the service.

According to still another aspect of the present invention, there is stored data received from the other device that is connected to the network, or data received from the wireless-communication device capable of performing peer-to-peer communication if the communication-information management apparatus, which determines whether it is permitted to communicate with a wireless terminal device and charges a value for data transmission, permits the data communication. When the data received from the other device that is connected to the network is stored, the data is transmitted to the wireless-communication device. When the data received from the wireless-communication device is stored, the data is transmitted to the other device that is connected to the network. Thereafter, information on transmitted data is transmitted to the communication-information management apparatus. As a result, it is possible to obtain an effect of realizing a highly reliable service capable of distributing data only between specified devices while securing benefit of a provider that provides the service.

### BRIEF DESCRIPTION OF DRAWINGS

[Fig. 1] Fig. 1 is a conceptual diagram of a communication-information management system according to the present invention.
[Fig. 2] Fig. 2 is a functional diagram of a configuration of the communication-information management system shown in Fig. 1.
[Fig. 3] Fig. 3 is a diagram of an example of subscriber data 73 shown in Fig. 2.
[Fig. 4] Fig. 4 is a diagram of an example of relay-provider data 74 shown in Fig. 2.
[Fig. 5] Fig. 5 is a flowchart of a processing procedure of a contents-transfer process performed by an access-point device 40.
[Fig. 6] Fig. 6 is a flowchart of a processing procedure of a contents-transmitting process performed by a cellular phone 50.
[Fig. 7] Fig. 7 is a flowchart of a processing procedure of a communication-information management process performed by a communication-information management apparatus 70.
[Fig. 8] Fig. 8 is a diagram of a hardware configuration of a computer functioning as the access-point device 40 shown in Fig. 1.
[Fig. 9] Fig. 9 is a diagram of a hardware configuration of a computer functioning as the cellular phone 50 or 60 shown in Fig. 1.
[Fig. 10] Fig. 10 is a diagram of a hardware configuration of a computer functioning as the communication-information management apparatus 70 shown in Fig. 1.

### EXPLANATIONS OF LETTERS OR NUMERALS

- 10: Contents-provider server communication- information management
- 20, 30: Company server
- 40: Access-point device
- 41: Communication processing unit
- 42: Storage unit
- 43: Contents
- 44: Internet-connection processing unit
- 45: Communication-information transmitting unit
- 46: Control unit
- 50, 60: Cellular phone
- 51: Communication processing unit
- 52: Storage unit
- 53: Contents
- 54: Communication-permission inquiring unit
- 55: Differential-compression processing unit
- 56: Communication-information transmitting unit
- 57: Control unit
- 70: Communication-information management apparatus
- 71: Communication processing unit
- 72: Storage unit
- 73: Subscriber data
- 74: Relay-provider data
- 75: Contents-provider data
- 76: Contents
- 77: Communication-permission determining unit
- 78: Charging unit
- 79: Control unit

### BEST MODE(S) FOR CARRYING OUT THE INVENTION

Exemplary embodiments of a communication-information management method, a communication-information management apparatus, a wireless-communication device, a relay device, a communication-information management program, a wireless-communication program, a relay program, and a communication-information management system according to the present invention are described in detail below with reference to the accompanying drawings. The present invention is not limited to these exemplary embodiments.

### Embodiment

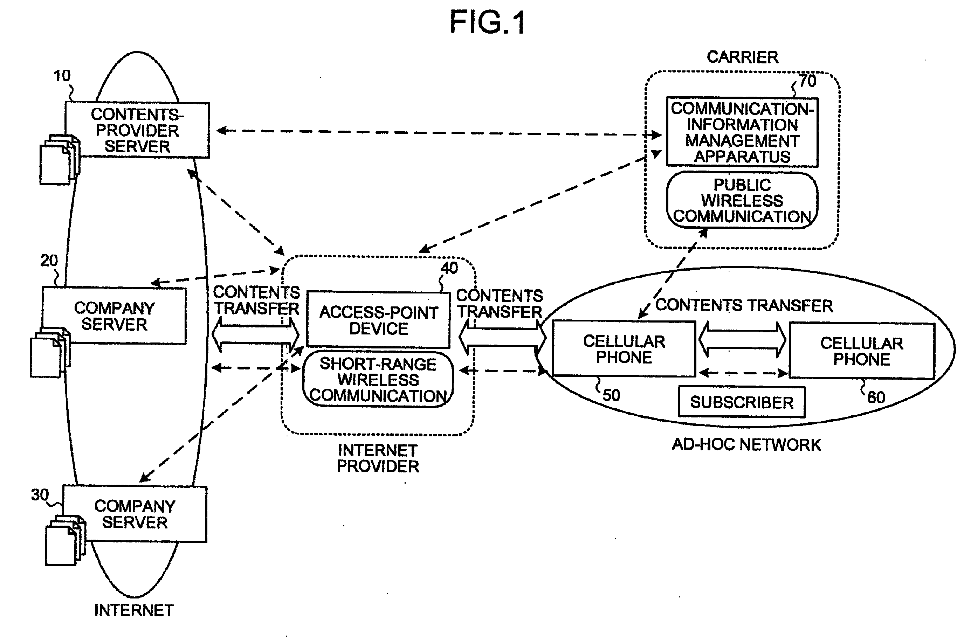

A concept of a communication-information management system according to an embodiment of the present invention is described. Fig. 1 is a conceptual diagram of the communication-information management system according to the embodiment.

As shown in Fig. 1, the communication-information management system includes a contents-provider server 10, company servers 20 and 30, an access-point device 40, cellular phones 50 and 60, and a communication-information management apparatus 70.

The contents-provider server 10 is a server device that provides other devices with contents via the Internet. When providing the cellular phone 50 or 60 with the contents, the contents-provider server 10 provides the contents via the access-point device 40 or the communication-information management apparatus 70.

The company server 20 or 30 is a server device that is used by a company transmitting or receiving contents to or from other devices via the Internet.

The access-point device 40 is a device installed by an internet provider and that functions as an access point via which the cellular phone 50 or 60 is connected to the Internet. The access-point device 40 receives from the cellular phone 50 or 60 a request for access to the Internet, and permits, when the request is authenticated, the cellular phone 50 or 60 to access the Internet.

The cellular phone 50 or 60 performs data communication with the communication-information management apparatus 70 installed by a carrier (cellular phone carrier) via a public line by using wireless communication. The cellular phone 50 or 60 also performs two-way data communication with the access-point device 40 by using short-range wireless communications such as a wireless LAN, a UWB (Ultra Wide Band), an IrDA (Infrared Data Association), and a Bluetooth.

The cellular phone 50 or 60 also performs the two-way data communication with the other one of the cellular phones 50 and 60 by using peer-to-peer communication thereby building an ad-hoc network.

The communication-information management apparatus 70 is a server device installed by the carrier and that provides contents for the cellular phone 50 or 60 that belongs to a subscriber who has subscribed to the carrier.

The communication-information management apparatus 70 permits the cellular phone 50 or 60 to transmit the contents to the other one of the cellular phones 50 and 60, in addition to providing contents for the cellular phone 50 or 60.

The communication-information management apparatus 70 also collects information related to a process of transmitting the contents performed by the contents-provider server 10, the access-point device 40, or the cellular phone 50 or 60, and charges a value to each of them.

For example, when the contents is transmitted from the contents-provider server 10 to the cellular phone 50 via the access-point device 40, an entry is made on the credit side of the account of the contents provider that owns the contents-provider server 10 for the contents. Also, an entry is made on the debit side of the account for a commission. That is, the contents provider receives or pays the balance of the account.

When the internet provider that owns the access-point device 40 transmits the contents to the cellular phone 50 or 60, or receives the contents from the cellular phone 50 or 60 and transfers received contents to the Internet, an entry is made on the credit side of the account of the internet provider for transferring the contents. That is, the internet provider is paid for the contents transfer.

For transferring contents to another cellular phone, an entry is made on the credit side of the account of a subscriber, an owner of the cellular phone 50 that transfers the contents to other cellular phone, and the subscriber is paid for the contents transfer. An entry is made on the debit side of the account of a subscriber, an owner of the cellular phone 60 that receives the contents at the end, and the subscriber pays for the contents transfer.

As described above, when the contents is transmitted to the cellular phone 50 or 60 via the Internet and the access-point device 40, or when the contents is transmitted from the cellular phone 50 or 60 to the company server 20 or 30 that is connected to the Internet via the access-point device 40, the communication-information management apparatus 70 gives a permission of the communication access thereby increasing reliability in the communication. Moreover, a corresponding account is charged to those involved in transmission of the contents, which makes it possible to realize a highly reliable service capable of distributing company data only between the cellular phones 50 and 60 while securing benefit of a service provider that provides the service.

Furthermore, data communication is performed between the cellular phone 50 or 60 and the access-point device 40 by using the high-speed short-range wireless communication, instead of between the cellular phone 50 or 60 and the communication-information management apparatus 70 by using the low-speed public wireless communication. As a result, it is possible to reduce load on the communication-information management apparatus 70 and efficiently transmit or receive a large amount of data.

Moreover, because the cellular phone 50 or 60 is capable of not only downloading the contents from the contents-provider server 10 or the company server 20 or 30, but also uploading data, it is possible to easily conduct a questionnaire survey by causing users to download a questionnaire and then upload answers to the questionnaire.

Still moreover, it the cellular phone 50 or 60 performs differential compression, i.e., uploading only an updated part from among data that has been downloaded, the differential compression is offset against a low data transfer rate, so that data is uploaded in a shorter period.

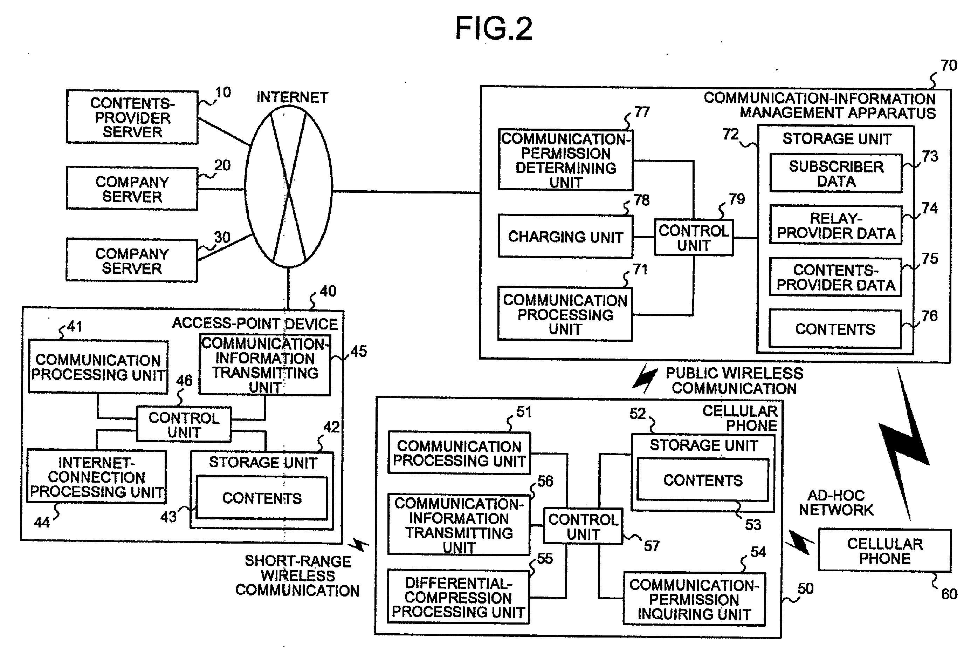

A functional configuration of the communication-information management system shown in Fig. 1 is described below. Fig. 2 is a functional diagram of a configuration of the communication-information management system shown in Fig. 1. The contents-provider server 10 and the company servers 20 and 30 have functions similar to those for a personal computer or a workstation that is commonly used. Therefore, functional units included therein are not shown in the figure.

As shown in Fig. 2, the access-point device 40 includes the access-point device 40, a communication processing unit 41, a storage unit 42, an internet-connection processing unit 44, a communication-information transmitting unit 45, and a control unit 46.

The communication processing unit 41 is a processing unit that communicates with the contents-provider server 10 or the company server 20 or 30 via the Internet. The communication processing unit 41 also performs the short-range wireless communication based on a communication system such as wireless LAN, UWB, and IrDA with the cellular phone 50 or 60.

The storage unit 42 is a storage device such as a memory and temporarily stores therein data such as contents 43 received from the contents-provider server 10, the company server 20 or 30, or the cellular phone 50 or 60.

Upon receiving a request for access to the Internet from the cellular phone 40 or 50, the internet-connection processing unit 44 transmits to an authentication server (not shown) user information including an ID or a password received from the cellular phone 40 or 50, and connects, when the cellular phone 40 or 50 is authenticated, the cellular phone 40 or 50 to the Internet.

When the contents are transmitted or received to or from the contents-provider server 10, the company server 20 or 30, or the cellular phone 50 or 60, the communication-information transmitting unit 45 transmits to the communication-information management apparatus 70 information related to transmission/reception of the contents.

The control unit 46 is a control unit that entirely controls the access-point device 40, and controls data transmission/reception between the functional units.

The cellular phone 50 includes a communication processing unit 51, a storage unit 52, a communication-permission inquiring unit 54, a differential-compression processing unit 55, a communication-information transmitting unit 56, and a control unit 57. Because the cellular phone 60 has the similar configuration, functional units of the cellular phone 60 are not shown in the figure.

The communication processing unit 51 is a processing unit that performs the public wireless communication with the communication-information management apparatus 70, performs the short-range wireless communication with the access-point device 40, and performs peer-to-peer communication with the other cellular phone 60.

The storage unit 52 is a storage device such as a memory, and stores therein data such as contents received from the access-point device 40 or the other cellular phone 60.

When the cellular phone 50 transmits the contents to the access-point device 40 or the other cellular phone 60, the communication-permission inquiring unit 54 inquires of the communication-information management apparatus 70 whether it is permitted to transmit.

the differential-compression processing unit 55 is a processing unit that uploads, when contents that have been downloaded via the Internet is partially changed and partially-changed contents are uploaded, only an updated part that is different from the downloaded contents. Upon receiving the updated part, the company server 20 or 30 creates whole contents from the updated part and the original contents.

The control unit 56 is a control unit that entirely controls the cellular phone 50, and controls data transmission/reception between the functional units.

The communication-information management apparatus 70 includes a communication processing unit 71, a storage unit 72, a communication-permission determining unit 77, a charging unit 78, and a control unit 79.

The communication processing unit 71 is a processing unit that communicates with the contents-provider server 10, the company server 20 or 30, or the access-point device 40 via the Internet, and also performs the public wireless communication with the cellular phone 50 or 60.

The storage unit 72 is a storage device such as a hard disk device, and stores therein data such as subscriber data 73, relay-provider data 74, contents-provider data 75, and contents 77.

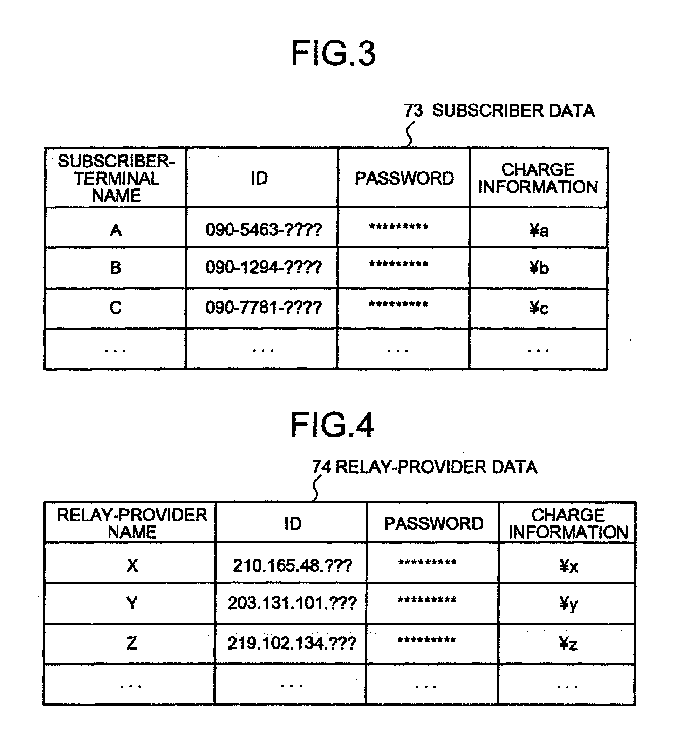

The subscriber data 73 is information on subscribers who has subscribed to communication services using the cellular phone 50 or 60 provided by the carrier. Fig. 3 is a diagram of an example of the subscriber data 73 shown in Fig. 2.

As shown in Fig. 3, the subscriber data 73 includes subscriber-terminal name, ID, password, and charge information. The subscriber-terminal name identifies the cellular phone 50 or 60. The ID is a telephone number allocated to each of the cellular phone 50'and 60.

The password is used for verification that is conducted when the cellular phone 50 or 60 accesses the communication-information management apparatus 70 to check the charge information. The charge information is information on fees charged to each of the cellular phone 50 or 60.

The relay-provider data 74 is information on internet providers that are provided with the access-point device 40 under a contract of communication services with the carrier. Fig. 4 is a diagram of an example of the relay-provider data 74 shown in Fig. 2.

As shown in Fig. 4, the relay-provider data 74 includes relay-provider name, ID, password, and charge information. The relay-provider name identifies the internet provider that installs the access-point device 40.

The ID is an IP address of the internet provider. The password is used for verification that is conducted when the internet provider accesses the communication-information management apparatus 70 to check the charge information. The charge information is information on fees charged to the internet provider.

The contents-provider data 75 is information on contents providers that provide the cellular phone 50 or 60 with contents. Specifically, the contents-provider data 75 includes, for example, IP address for specifying a server of the contents provider, and charge information that is charged to the contents provider.

The contents 76 is contents to be distributed to the cellular phone 50 or 60 or contents received from the cellular phone 50 or 60.

Referring back to Fig. 2, upon receiving from the cellular phone 50 or 60 a request to inquire whether it is permitted to transmit contents to the other cellular phone 50 or 60 or the access-point device 40, the communication-permission determining unit 77 determines-whether a destination of the contents is under contract by referring to the subscriber data 73 or the relay-provider data 74, and returns, when the destination of the contents is under contract, a permission for transmitting the contents.

Upon receiving from the access-point device 40 or the cellular phone 50 or 60 a contents-transmission completion message, the charging unit 78 charges a value to the contents-provider server 10, the access-point device 40, or the cellular phone 50 or 60.

The control unit 79 is a control unit that entirely controls the communication-information management apparatus 70, and controls data transmission/reception between the functional units.

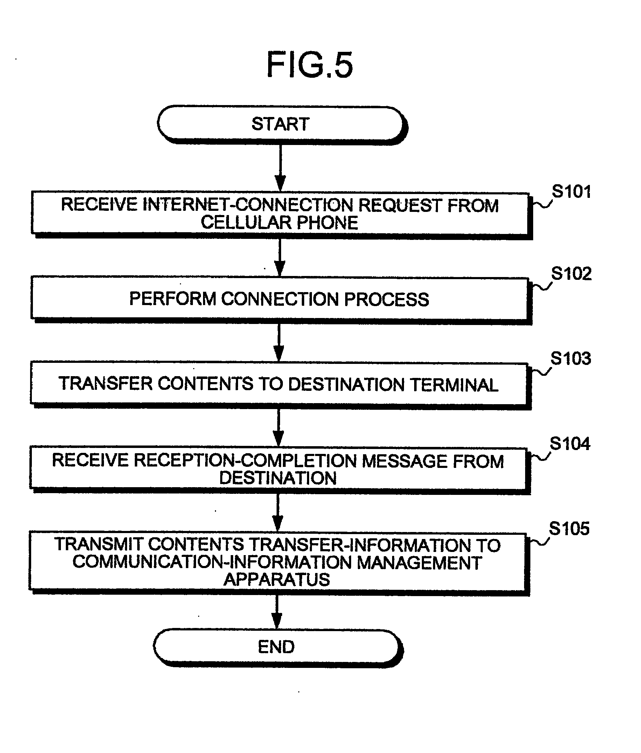

A processing procedure of a contents-transfer process performed by the access-point device 40 is described below. Fig. 5 is a flowchart of the processing procedure of the contents-transfer process performed by the access-point device 40.

The internet-connection processing unit 44 of the access-point device 40 receives an internet-connection request including information such as a user ID and a password from the cellular phone 50 or 60 (step S101). Thereafter, the internet-connection processing unit 44 connects the cellular phone 50 or 60 to the Internet (step S102).

Specifically, the internet-connection processing unit 44 transmits the user ID and the password that are received from the cellular phone 50 or 60 to the authentication server, and is standby until receiving a result of authentication from the authentication server. Only when the user ID and the password are authentic, the internet-connection processing unit 44 connects the cellular phone 50 or 60 to the Internet.

Subsequently, the communication processing unit 41 of the access-point device 40 transfers the contents received from the contents-provider server 10 or the company server 20 or 30 to the cellular phone 50 or 60 via the Internet. Alternatively, the communication processing unit 41 transfers the contents received from the cellular phone 50 or 60 to the company server 20 or 30 via the Internet (step S103).

In a case of transmitting the contents to the company server 20 or 30 or the cellular phone 50 or 60, the communication-information transmitting unit 45 receives a message that the company server 20 or 30 or the cellular phone 50 or 60 has received the contents (step S104).

Thereafter, at the end of the contents-transfer process, the communication-information transmitting unit 45 transmits to the communication-information management apparatus 70 information indicating that the contents has been transferred (step S105). The communication-information management apparatus 70 charges a value for the contents transfer to the internet provider that manages the access-point device 40 based on this information.

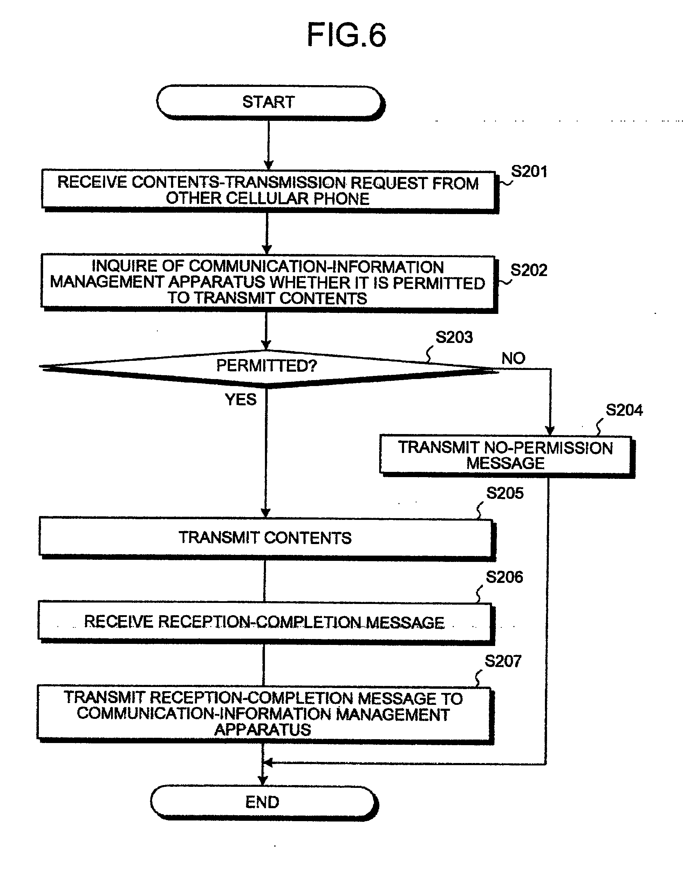

A contents-transmitting process performed by the cellular phone 50 is described below. Fig. 6 is a flowchart of a processing procedure of the contents-transmitting process performed by the cellular phone 50.

First, the communication processing unit 51 of the cellular phone 50 receives from the other cellular phone 60 a request for transmitting contents to the other cellular phone 60 or transmitting contents to the company server 20 via the access-point device 40 (step S201). Then, the communication-permission inquiring unit 54 inquires of the communication-information management apparatus 70 whether it is permitted to transmit the contents (step S202).

Subsequently, the communication-permission inquiring unit 54 receives a result of determination whether it is permitted to transmit from the communication-information management apparatus 70 to check whether it is permitted to transmit (step S203). When it is not permitted to transmit (No at step S203), the communication-permission inquiring unit 54 transmits a no-permission message to the other cellular phone 60 (step S204).

When it is permitted to transmit (Yes at step S203), the communication-permission inquiring unit 54 transmits the contents to the other cellular phone 60 or transmits the contents to the company server 20 or 30 via the access-point device 40 (step S205), and then receives a message that the other cellular phone 60 or the company server 20 or 30 has received the contents (step S206).

Thereafter, at the end of the contents-transmitting process, the communication-information transmitting unit 56 transmits to the communication-information management apparatus 70 a message that the cellular phone 50 has transmitted the contents (step S207). Upon receiving this message, the communication-information management apparatus 70 makes an entry on the credit side of the account of the cellular phone 50 for the contents transfer.

Although the contents is transmitted in response to a contents-transmission request received from the other cellular phone 60 in the example, the cellular phone 50 can offer the contents to the cellular phone 60.

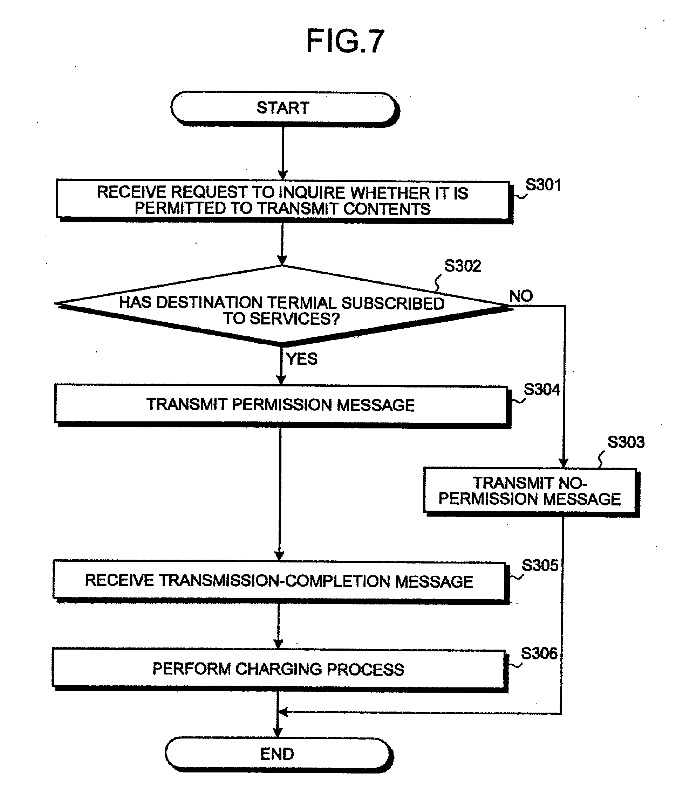

A communication-information management process performed by the communication-information management apparatus 70 is described below. Fig. 7 is a flowchart of a processing procedure of the communication-information management process performed by the communication-information management apparatus 70.

First, the communication processing unit 71 of the communication-information management apparatus 70 receives from the cellular phone 50 a request to inquire whether it is permitted to transmit the contents to the access-point device 40 or the other cellular phone 60 (step S301).

Then, the communication-permission determining unit 77 checks whether an owner of the destination terminal, i.e., an internet provider that owns the access-point device 40 or an owner of the other cellular phone 60 has subscribed to communication services by referring to the subscriber data 73 or the relay-provider data 74 (step S302).

When the destination terminal has not subscribed to communication services (No at step S302), the communication-permission determining unit 77 transmits a no-permission message to the cellular phone 50 that has transmitted the request to inquire whether it is permitted to transmit the contents (step S303), and the process control ends the communication-information management process.

When the destination terminal has subscribed to communication services (No at step S302), the communication-permission determining unit 76 transmits a permission message to the cellular phone 50 that has transmitted the request to inquire whether it is permitted to transmit the contents (step S304).

Thereafter, the communication processing unit 71 receives from the cellular phone 50 a message that the cellular phone 50 has transmitted the contents (step S305). The charging unit 78 makes an entry on the credit side of the account of the subscriber who owns the cellular phone 50 for the contents transmission, and performs a process of updating the charge information stored in the subscriber data 73 (step S306). Thus, the communication-information management process ends.

Although it is described a case in which a communication is performed between the cellular phones 50 and 60 that have subscribed to communication services of the carrier, it is allowable that another cellular phone that has subscribed to communication services of the carrier relays the communication between the two cellular phones.

A relay cellular phone that relays the communication can be decided by either a cellular phone working as the transmitter of the contents or the communication-information management apparatus 70. In a case that the cellular phone working as the transmitter of the contents decides the relay cellular phone, the cellular phone working as the transmitter of the contents first obtains a permission of searching the relay cellular phone from the communication-information management apparatus 70.

Then, the cellular phone working as the transmitter of the contents requests one of the cellular phones to function as the relay cellular phone. The requested cellular phone tries to communicate with a cellular phone working as the receiver of the contents.

Upon receiving an acknowledgement of relay from the cellular phone working as the receiver of the contents as a result of communication success, the requested cellular phone notifies the cellular phone working as the transmitter of the contents that relay is available. The cellular phone working as the transmitter of the contents notifies the communication information management apparatus 70 that the relay cellular phone is decided.

In a case that the communication-information management apparatus 70 decides the relay cellular phone that relays communication, the cellular phone working as the transmitter of the contents first requests the communication-information management apparatus 70 to decide the relay cellular phone that relays communication.

Then, the communication-information management apparatus 70 obtains both an acceptance of relay from the relay cellular phone and an acknowledgement of communication via the relay cellular phone from the cellular phone working as the receiver of the contents. The communication-information management apparatus 70 notifies the cellular phone working as the transmitter of the contents that it is available to communicate with the cellular phone working as the receiver of the contents via the relay cellular phone.

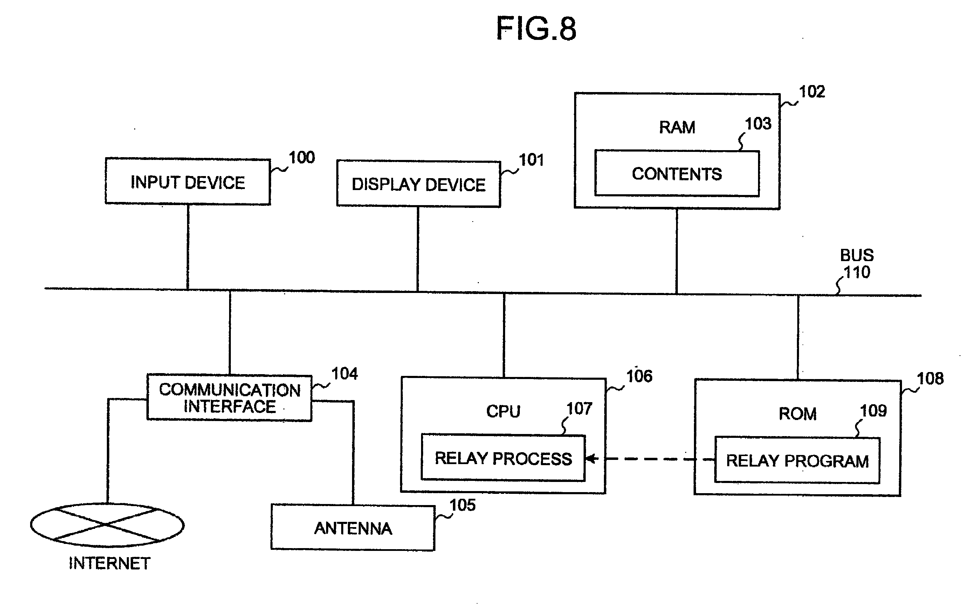

A computer program can be executed on a computer to implement the various processes described in the above embodiments. An example of such a computer is described below with reference to Figs. 8 to 10.

Fig. 8 is a diagram of a hardware configuration of a computer functioning as the access-point device 40 shown in Fig. 1.

This computer includes an input device 100, a display device 101 that displays state of the access-point device 40, a RAM (Random Access Memory) 102 that temporarily stores therein contents 103, a communication interface 104 that communicates with the contents-provider server 10 or the company server 20 or 30 via the Internet or performs the short-range wireless communication with the cellular phone 50 or 60 by using an antenna 105, a CPU (Central Processing Unit) 106, and a ROM (Read Only Memory) 108 that stores therein a relay program 109, those unit being connected to each other via a bus 110.

The relay program 109 is a computer program that, when executed, implements the same function as the access-point device 40. The CPU 106 reads the relay program 109 from the ROM 108 and executes the read program, thereby implementing a relay process 107.

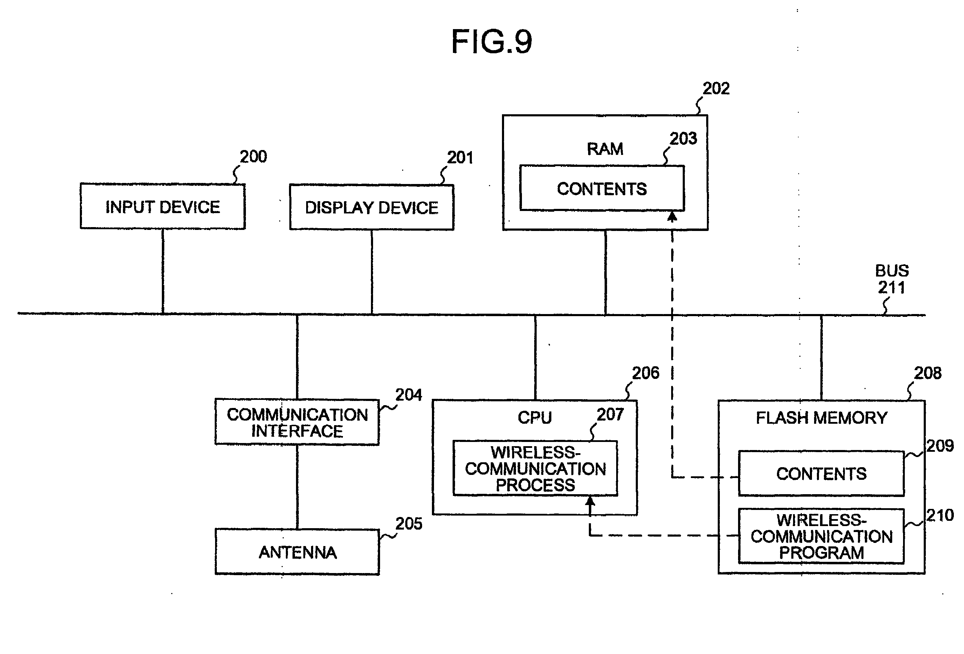

Fig. 9 is a diagram of a hardware configuration of a computer functioning as the cellular phones 50 and 60 shown in Fig. 1.

This computer includes an input device 200 via which a user inputs data, a display device 201, a RAM 202, a communication interface 204 that performs short-range wireless communication with the access-point device 40 by using an antenna 205, performs public wireless communication with the communication-information management apparatus 70, or performs communication with the other cellular phone 50 or 60, a CPU 206, and a flash memory 208, those unit being connected to each other via a bus 211.

The flash memory 208 stores therein a computer program that, when executed, implements the same function as the cellular phone 50 or 60, that is, a wireless-communication program 210 shown in Fig. 9. The CPU 206 reads the wireless-communication program 210 from the flash memory 208 and executes the read program, thereby implementing a wireless-communication process 207. The wireless-communication process 207 corresponds to functions of the functional units of the cellular phone 50 or 60.

The flash memory 208 also stores therein contents 209. The contents 209 corresponds to contents 53 stored in the storage unit 52 shown in Fig. 2. The CPU 206 stores the contents 209 in the flash memory 208. The CPU 206 loads the contents 209 from the flash memory 208 into the RAM 202, and performs various processes by using contents 203 stored in the RAM 202.

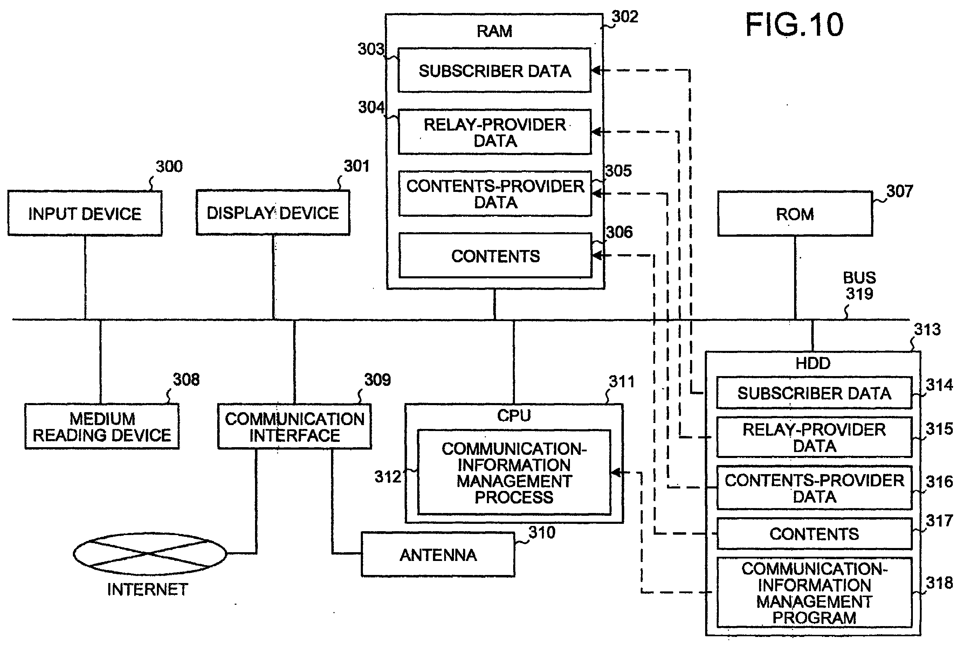

Fig. 10 is a diagram of a hardware configuration of a computer functioning as the communication-information management apparatus 70 shown in Fig. 1.

This computer includes an input device 300 via which a user inputs data, a display device 301, a RAM 302, a ROM 307, a medium reading device 308 that reads a computer program from a recording medium that stores therein various computer programs, a communication interface 309 that communicates with the access-point device 40 or the contents-provider server 10 via the Internet, or performs wireless communication with the cellular phone 50 or 60 by using an antenna 310, a CPU 311, and an HDD (Hard Disk Drive) 313, those unit being connected to each other via a bus 319.

The HDD 313 stores therein a computer program that, when executed, implements the same function as the communication-information management apparatus 70, that is, a communication-information management program 318 shown in Fig. 10. The CPU 311 reads the communication-information management program 318 from the HDD 313 and executes the read program, thereby implementing a communication-information management process 312. The communication-information management process 312 corresponds to functions of the functional units of the communication-information management apparatus 70.

The HDD 313 also stores therein subscriber data 314, relay-provider data 315, contents-provider data 316, and contents 317. The subscriber data 314, the relay-provider data 315, the contents-provider data 316, and the contents 317 correspond to the subscriber data 73, the relay-provider data 74, the contents-provider data 75, and the contents 76, those stored in the storage unit 72 shown in Fig. 2, respectively.

The CPU 311 stores the subscriber data 314, the relay-provider data 315, the contents-provider data 316, and the contents 317 in the HDD 313. The CPU 311 loads those data from the HDD 313into the RAM 302, and performs various processes based on subscriber data 303, relay-provider data 304, contents-provider data 305, and contents 306 stored in the RAM 302.

In the present embodiment as described above, data communication is performed between the cellular phone 50 or 60 and the access-point device 40, or data communication is performed between the cellular phones 50 and 60 under conditions that the communication-information management apparatus 70 determines whether communication between the cellular phones 50 and 60 is permissible and it is determined that the communication is permissible. When the data communication is performed, the communication-information management apparatus 70 stores therein information related to the data communication, and charges, based on the information, a value for the data communication performed by the cellular phone 50 or 60 or the access-point device 40. As a result, it is possible to realize a highly reliable service capable of distributing data only between specified devices as well as to ensure the benefit of a provider that provides the service.

Although the present invention has been described with reference to specific exemplary embodiments, it will be evident that various modification and changes can be made to these embodiments without departing from the broader spirit of the invention as set forth in the claims.

For example, although the cellular phones are used as wireless-communication terminals that perform peer to-peer communication in the embodiments, other wireless-communication terminals can be used such as a PDA (Personal Digital Assistance) and a personal computer those having a wireless-communication function.

Of the processes described in the embodiments, all or part of the processes explained as being performed automatically can be performed manually. Similarly, all or part of the processes explained as being performed manually can be performed automatically by a known method.

The processing procedures, the control procedures, specific names, various data, and information including parameters described in the document or shown in the drawings can be changed as required unless otherwise specified.

The constituent elements of the device shown in the drawings are merely conceptual, and need not be physically configured as illustrated. The constituent elements, as a whole or in part, can be separated or integrated either functionally or physically based on various types of loads or use conditions.

The process functions performed by the device are entirely or partially realized by the CPU or computer programs that are analysed and executed by the CPU, or realized as hardware by wired logic.

### INDUSTRIAL APPLICABILITY

As set forth hereinabove, a communication-information management method, a communication-information management apparatus, a wireless-communication device, a relay device, a communication-information management program, a wireless-communication program, a relay program, and a communication-information management system according to the present invention are suitable for a communication system in which a highly reliable service capable of distributing data only between specified devices while securing benefit of a provider that provides the service.

## Claims

1. A communication-information management method of managing information related to peer-to-peer data communication between wireless-communication devices or information related to data communication relayed by a relay device, the relay device relaying, when a wireless-communication device is authenticated and connected to a predetermined network, data communication between the wireless-communication device and a different device that is connected to the network, the communication-information management method comprising:
a communication step of determining whether it is permitted to perform data communication between the wireless-communication device and the relay device or data communication between the wireless-communication devices, and performing, when it is determined that the data communication is permissible, the data communication between the wireless-communication devices;
an information storing step of storing information related to the data communication when the data communication is performed at the communication step; and
a charging step of charging a value for the data communication performed by the wireless-communication device or the relay device based on information stored at the information storing step.

2. The communication-information management method according to claim 1, wherein the communication step includes performing data communication for uploading data from the wireless-communication device to the different device that is connected to the network.

3. The communication-information management method according to claim 2, wherein the communication step includes uploading only an updated part of data that has been downloaded from the different device that is connected to the network to the wireless-communication device.

4. The communication-information management method according to any one of claims 1 to 3, wherein the data communication between the wireless-communication device and the relay device is performed based on a data communication system selected from a group consisting of wireless LAN, UWB, IrDA, and Bluetooth.

5. A communication-information management apparatus that manages information related to peer-to-peer data communication between wireless-communication devices or information related to data communication relayed by a relay device, the relay device relaying, when a wireless-communication device is authenticated and connected to a predetermined network, communication between the wireless-communication device and a different device that is connected to the network, the communication-information management apparatus comprising:
an information storage unit that stores therein, when data communication is performed between the wireless-communication device and the relay device or when, as a result of determination that data communication between the wireless-communication devices is permissible, data communication is performed between the wireless-communication devices, information related to the data communication; and
a charging unit that charges a value for the data communication performed by the wireless-communication device or the relay device based on the information that is stored in the information storage unit.

6. A wireless-communication device that performs wireless communication with other devices, the wireless-communication device comprising:
a storage unit that stores therein data received from a relay device or data received from a different wireless-communication device via peer-to-peer communication, the relay device relaying, when the wireless-communication device is authenticated and connected to a predetermined network, data communication between the wireless-communication device and a different device that is connected to the network;
a data transmitting unit that transmits the data stored in the storage unit to the relay device, or that inquires of a communication-information management apparatus, which determines whether it is permitted to perform communication between wireless terminal devices and charges a value for data transmission, whether it is permitted to perform data communication and then transmits the data stored in the storage unit to a wireless-communication device that is determined to be permissible for data communication as a result of inquiry; and
a data transmission-information transmitting unit that transmits to the communication-information management apparatus information related to data transmission performed by the data transmitting unit.

7. A relay device that connects, under conditions that a communication-information management apparatus, which determines whether it is permitted to perform communication between wireless terminal devices capable of peer-to-peer communication and charges a value for data transmission, permits to perform data communication, and that a wireless-communication device capable of peer-to-peer communication is authenticated, the wireless-communication device to a predetermined network and relays data communication between the wireless-communication device and a different device that is connected to the network, the relay device comprising:
a storage unit that stores therein data received from the different device that is connected to the network or data received from the wireless-communication device;
a data transmitting unit that transmits, when the data received from the different device that is connected to the network is stored in the storage unit, the data to the wireless-communication device, and that transmits, when the data received from the wireless-communication device is stored in the storage unit, the data to the different device that is connected to the network; and
a data transmission-information transmitting unit that transmits to the communication-information management apparatus information related to data transmission performed by the data transmitting unit.

8. A communication-information management program for managing information related to peer-to-peer data communication between wireless-communication devices or information related to data communication relayed by a relay device, the relay device relaying, when a wireless-communication device is authenticated and connected to a predetermined network, data communication between the wireless-communication device and a different device that is connected to the network, the communication-information management program causing a computer to execute:
an information storing step of storing, when data communication is performed between the wireless-communication device and the relay device or when, as a result of determination that data communication between the wireless-communication devices is permissible, data communication is performed between the wireless-communication devices, information related to the data communication; and
a charging step of charging a value for the data communication performed by the wireless-communication device cr the relay device based on the information stored at the information storing step.

9. A wireless-communication program for performing wireless communication with a different device, the wireless-communication program causing a computer to execute:
a storing step of storing data received from a relay device or data received from a different wireless-communication device via peer-to-peer communication, the relay device relaying, when the wireless-communication device is authenticated and connected to a predetermined network, data communication between the wireless-communication device and a different device that is connected to the network;
a data transmitting step of transmitting data stored at the storing step to the relay device, or inquiring of a communication-information management apparatus, which determines whether it is permitted to perform communication between wireless terminal devices and charges a value for data transmission, whether it is permitted to perform data communication and then transmits the data stored at the storing step to a wireless-communication device that is determined to be permissible for data communication as a result of inquiry; and
a data transmission-information transmitting step of transmitting to the communication-information management apparatus information related, to data transmission performed at the data transmitting step.

10. A relay program for connecting, under conditions that a communication-information management apparatus, which determines whether it is permitted to perform communication between wireless terminal devices capable of peer-to-peer communication and charges a value for data transmission, permits to perform data communication, and that a wireless-communication device capable of peer-to-peer communication is authenticated, the wireless-communication device to a predetermined network and relaying data communication between the wireless-communication device and a different device that is connected to the network, the relay program causing a computer to execute:
a storing step of storing data received from the different device that is connected to the network or data received from the wireless-communication device;
a data transmitting step of transmitting, when the data received from the different device that is connected to the network is stored at the storing step, the data to the wireless-communication device, and that transmits, when the data received from the wireless-communication device is stored in a storage unit, the data to the different device that is connected to the network; and
a data transmission-information transmitting step of transmitting to the communication-information management apparatus information related to data transmission performed at the data transmitting step.

11. A communication-information management system that manages information related to peer-to-peer data communication between wireless-communication devices or information related to data communication relayed by a relay device, the relay device relaying, when a wireless-communication device is authenticated and connected to a predetermined network, data communication between the wireless-communication device and a different device that is connected to the network, the communication-information management system comprising:
a communication unit that determines whether it is permitted to perform data communication between the wireless-communication device and the relay device or data communication between the wireless-communication devices, and performs, when it is determined that the data communication is permissible, the data communication between the wireless-communication devices;
an information storage unit that stores therein information related to the data communication when the data communication is performed by the communication unit; and
a charging unit that charges a value for the data communication performed by the wireless-communication device or the relay device based on the information stored in the information storage unit.
